# EUROPEAN PATENT SPECIFICATION

(11) **EP 3 289 580 B1**
(45) Date of publication and mention of the grant of the patent: **14.10.2026**
(21) Application number: 16733738.5
(22) Date of filing: 29.04.2016
(51) Int. Cl.: G09C 1/00, H04L 9/32, H04L 9/40, H04L 9/14

(54) **A METHOD, A COMPUTER PROGRAM PRODUCT AND A QKEY SERVER**
VERFAHREN, COMPUTERPROGRAMMPRODUKT UND QKEY-SERVER
PROCÉDÉ, PRODUIT DE PROGRAMME INFORMATIQUE ET SERVEUR QKEY

(30) Priority: 30.04.2015 NL 2014742
(43) Date of publication of application: 07.03.2018
(73) Proprietor: Ubiqu B.V., 3054 EM Rotterdam (NL)
(72) Inventor: GORANOV, Boris Petrov Dokov, 3054 EM Rotterdam (NL)
(74) Representative: V.O.
(86) International application number: PCT/NL2016/050308
(87) International publication number: WO 2016/175660

(56) References cited:
- EP-A1- 2 568 406
- WO-A1-2004/090696
- WO-A2-2013/188599
- GB-A- 2 496 354
- US-A1- 2002 080 190
- "Making phones as secure as smart cards", 27 February 2015 (2015-02-27), XP055259044, Retrieved from the Internet <URL:http://www.trustindigitallife.eu/uploads/TDW 2015/Presentation-Matti_van der Gronde.pdf> [retrieved on 20160316]
- FORGET ET AL: "The virtual smart card", CARD TECHNOLOGY TODAY, ELSEVIER, vol. 19, no. 7-8, 1 July 2007 (2007-07-01), pages 12, XP022201907, ISSN: 0965-2590, DOI: 10.1016/S0965-2590(07)70116-0

## Description

The present invention relates to a method.

Secure elements are an integral part of IT solutions for they provide secure storage for cryptographic keys and in case of SIM cards and smartcards they secure user authentication, signatures and secure messages.

Conceptually this solution comprises of a device, an application programming interface API, a display, a keypad, a secure element and an asset. In traditional smartcard and sim card solutions the asset is stored on the secure element. Pin entry and display is implemented on the device and through the API the operation of the asset is performed in the context, after PIN entry.

A key element for a secure solution is that the context is tightly coupled to secure pin entry and the asset is securely stored in hardware. To achieve this a so-called finread specification was established eliminating the threat of man in the middle attacks. However, finread readers are expensive and are not available for tablets, thus wide spread use is not achieved.

It is an object of the invention to provide an improved solution for tightly coupling the context to the secure pin and securely storing the asset in hardware. Thereto, according to the invention, a method is provided, called qKey, wherein context and pin are tightly coupled orchestrating secure entry while displaying and ensuring use of a secure element for the asset. qKey is a secure element with sole control technology optionally including a secure second screen. The second screen can also be integrated within the same device, wherein a first app is active on the device and a second app is active on the display and entry component.

Generally, the method includes the steps of sending the context to a secure element, ensuring that the context is shown to a user, acquiring user consent by performing an authentication check, combining an authentication result with the secured context, and performing an operation on the context with the asset if the authentication was successful.

Basically, the secure element was securely associated with the display and entry device in an earlier phase, wherein the secure element has access to authentication data, and wherein the ensuring step and the acquiring step are performed by the secure element. Also a step of checking the outcome of the authentication check is performed by the secure element. Further, the performing step can be carrier out by the secure element. Upon receipt of the context, the secure element stores the context to perform the operation later, after successful authentication, as described above. Here, the secure element has a secure association with the display and entry device, or app. Optionally, the qKey server receives the context via its API and processes the communication, including having access to authentication data, the ensuring step, the acquiring step and/or the performing step.

In a particular embodiment, the conventional middleware API is modified such that the context is entered prior to PIN entry. Instead of sending the context to the secure element directly, there is an alternative approach wherein the context is sent to a Qkey server, via the qkey API. Here, the qkey server was securely associated with the secure element in an earlier phase. This secure association is used to securely sent the context to the secure element through the qkey server. The qkey server now ensures that the context is shown to the user via the middle ware in this case, and the user can now approve the context with his or her PIN, the PIN is combined with the secured context and secure element performs the operation on the context with the asset. A man in the middle attack is thwarted, because a hash can not be substituted by an attacker.

In a further embodiment, the secure element is located at the qkey.

In addition, the invention relates to a qKey server.

Further, the invention relates to computer program products. A computer program product may comprise a set of computer executable instructions stored on a data carrier, such as a CD or a DVD. The set of computer executable instructions, which allow a programmable computer to carry out the methods as defined above, may also be available for downloading from a remote server, for example via the Internet or through an app.

Other advantageous embodiments according to the invention are described in the following claims.

By way of example only, embodiments of the present invention will now be described with reference to the accompanying figures in which
Fig. 1 shows a traditional setup;
Fig. 2 shows a first setup according to the invention;
Fig. 3 shows a second setup according to the invention, and
Fig. 4 shows a flow chart of a method according to the invention.

It is noted that the figures show merely a preferred embodiment according to the invention. In the figures, the same reference numbers refer to equal or corresponding parts.

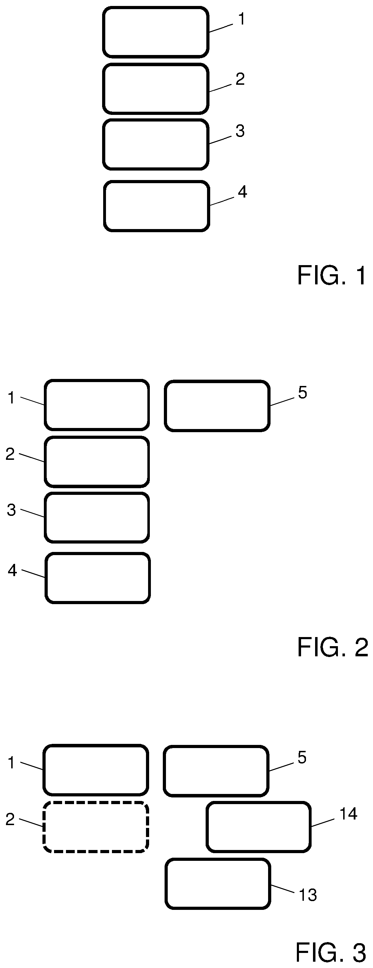

Fig. 1 traditional setup, comprising a device 1 running an application for providing a context, middleware 2 including an application programming interface API, a display and pin entry 3, and a secure element 4 interacting with an asset containing secret information .

qKey introduces a new element, a qkey service. qKey tighly couples or connects context and pin, orchestrates secure entry and displays and ensures use of a secure element for the asset. The qkey is a secure element with sole control technology and a secure second screen, even within the same device.

Fig. 2 shows a first setup according to the invention. Here, the traditional smart card configuration used on a PC with middleware and a reader is used in another way. The first setup according to the invention includes a qKey api 5.

The middleware API is modified such that the context is entered prior to PIN entry. Instead of sending the context to the secure element directly, there is an alternative approach wherein the context is sent to a Qkey server, through the qkey API. Here, the qkey server was securely associated with the secure element in an earlier phase. This is a one to one connection. This secure association is used to securely sent the context to the secure element via the qkey server. The qkey server now ensures that the context is shown to the user via the middle ware in this case, and the user can now approve the context with his or her PIN, the PIN is combined with the secured context and secure element performs the operation on the context with the asset. A man in the middle attack is thwarted, because a hash can not be substituted by an attacker.

A improvement to the first setup shown in Fig. 2 could be that when the secure element is associated with the qkey, this association comprises also an association with a user token, such as a mobile phone, tablet or laptop or dedicated hardware, like a Bluetooth dongle or watch. This user token can then be used for display of the context and entry of the PIN. It is possible to activate numerous devices with the same secure element, so it will be easier to replace a secure element with approval of another but same level secure element.

An improvement to this configuration could be that the secure element itself is located on a different location than the location of the device on which the asset is initiated and on which the middleware has been installedThe device which communicates with the middleware of the qkey API then also will be associated with the qkey or secure element SE prior to the entry of the context into one of the API's.

The context can now enter into either the middleware or the qkey API, the qkey server now sending the context to the qkey, the key ensures that the context is sent to the SE and the qkey ensures that the context is displayed to the user is displayed and a user consent is acquired by an authentication check, e.g. by entering a a PIN. After PIN entry by the user, the qkey ensures the assets performs its operation on the previously prepared context in the secure element. The context can be a transaction or a digital signature or another operation that a user wishes to be executed.

The device can be a PC, laptop, mobile phone, watch, set-top box, Point or sales terminal, ATM, website of application. The middleware can be a CSP, PKCS#11, radius, LDAP, MS AD, SOAP/oAUTH/Openid identity provider or similar. The qkey API can be implemented as a webservice or any other suitable abstraction.

The qKey is an application, possibly on a networked computing device possibly attached to a hardware security model HSM for secure crypto storage, or completely implemented in a HSM, which is attached to a network and which implements the qKey API, possibly with a middleware intermediate in front.

The secure element can be a SIM in a mobile phone, a smart card in a laptop, a secure execution environment in a processor as separate chip in a motherboard etc. The display and (software)keyboard can be intermediated via the middle ware or on a mobile phone.

The Asset can be information, a secret and cryptographic secret, a symmetric cryptographic secret, an asymmetric cryptographic secret, a biometric template or something other, possibly of value to the user, related to the secure element. Preferably, when something physical is attached to the secure element, the use of that asset is controlled in a similar fashion.

The secure association of the qkey with the secure element and the display and pin entry device can have the following options.

Statically, where the association is performed at a prior phase, in a possibly secure environment. Dynamically, where in one embodiment the secure element generates the asset and an activation announce message or nonce implying a number used once. This activation announce message is then exported from the secure element and then distributed to the display and pin entry device, where this announce message is entered. The display and the pin entry device can be established using zero-knowledge proves, diffie-helman or any other key-establishment protocols resulting in a shared secured or there form of a secure connection with the secure element. As an example, a secure connection can be obtained using a method as described in the earlier Dutch patent application No. 2011717.

In a particular embodiment, a process may include the following protocol.

### Principals

an unregistered device C (e.g. a telephone used for display and pin entry)
a Secure element component G(e.g. HSM, secure element)
a dispatcher component D(qkey)
Context
Gateway G has a public key PK(G) which is known to device C
Device C has a nonce N, know to G.
There is an open subscription request with said nonce N and associated token T on Dispatcher

### Steps

C generates a fresh nonce NC and a temporary encryption key K
C sends to G: (NC, K, N) encrypted with PK(G)
G decrypts the message with the private key associated to PK(G)
G executes the following protocols, which result in G having NS and T
   - Subscribing to the open subscription
      - G sends to D: N
      - D ensures that the nonce N is linked to an open subscription, and if so,
      - D sends to G: T
   - Establishing the key and linking it to the subcription
      - G generates a fresh nonce NS, associated to T and NC
      - G computes the communication key from NC and NS and stores it with T
G sends to C: (NC, NS, T) encrypted with K
C decrypts the previous message with K
C computes the communication key from NC and NS

Such an association can also be statically and dynamically be established between middleware and qkey API, middleware and secure element, middleware and display and Pin entry device, or between qKey API and display and Pin entry device and between qkey api and secure element.

When the middleware and display and Pin entry device have establishing a secure association this is also referred to as an identification on the middleware side and a device addition on the display and Pin entry token side.

Fig. 3 shows a second setup according to the invention. In this advantageous embodiment, a secure element 14 is located in a datacenter, where also the qkey is located. The secure element 14 is implemented in software in a HSM and contains the public key of the qkey and a private exclusive to it selves. The secure element and the qkey are statically associated, knowing each others public keys. On the secure element an asset is created, the asset being an asymmetric public private key pair and an activation an announce message. Optionally, a second public key is prestored in the secure element, used to encrypt the activation announce message. The display and entry token can be implemented as an app on a user token such a mobile phone. This user token is associated with the qkey. The activation announce message is entered on the display and entry token 13. If it was encrypted, it has to be decrypted with the private key. This private key could be located in a secure printing facility used to print it on tamper prove paper and stored in a closed tamper evident envelope and the activation announce message could be distributed to the user and only given to the user once the identity of the user is established with sufficient security. When an activation was successful it is possible to create another user token on a different device, like phone or tablet with the same association with the qKey server, or a new association, based in the original association, or simply linked to the original association, or just reuse some data that was established in relation to the association, i.e. someone's identity. After the display and the entry token establishes a secure association with the secure element, using the activation announce message to the secure element, the qKey orchestrates the message exchange.

The app on the user token may have three functions, viz receiving messages from qkey or secure element, displaying context to the user and secure entry of a authentication result, such as a user PIN. The authentication result could be a PIN, a biometric element of the user or a second device, for instance a Bluetooth device in possession of the user queried by the app for presence or user input.

To facilitate secure use of the app, the app has a secure association with the qkey and/or the secure element and/or middleware and the apps stores this association securely, by use of cryptography, possibly obfuscated cryptography to prevent disclosure of the association.

The app is also obfuscated to itself to prevent decryption and use of the association. The obfuscation of the association and the obfuscation of the app can be uniquely generated for each device during associating and can be update on regular intervals.

Preferably, the app checks it's own integrity. One way to check the integrity is by calculating a hash and verifying that this hash is correct. The app may checks it's environment, e.g. by way of reading environment identifying or partially identifying data and comparing this with previously stored data or uploading this to a verification services. The app can be registered on a network. This registration can be push-messaging, GSM SMS or IP network. Part of the association with the qkey or the secure element is the address that belongs to this network registration. In a preferred embodiment, when context is sent to the display and entry token it is always sent to this address, preventing cloning of the app onto another device. The app actively monitors the mobile phone. If the app detects that the phone is compromised, a malice app is present, or when a hostile heuristic is detected, it notifies the qkey of this fact and/or ceases operation, and/or wipes security sensitive parameters. App may use SSL for secure communication and SSL certificate pinning to prevent SSL vulnerabilities. Additionally, the app uses different facilities offered by the OS such secure cryptographic key storage to leverage any additional measure also offered by (the OS of) the user token. Also the qKey server and the device may communicate via SSL. Preferably, the qKey server and/or the secure element sends a message including context to a pre-specified address of the app, so that it is counteracted that the message is delivered at a app clone. This can e.g. be accomplished using a push message, SMS message or via an IP address.

Additionally, in order to prevent trivial attacks a customer keyboard is used, possibly in such an arrangement that the location of the symbols or the location input or direction of the user input doesn't disclose the inputted symbol.

The association of middleware with the qkey of the display and login token, can take many forms, the preferred form is through the identification announce message introduced earlier. This announce message can subsequently be used, to establish an end-2-end secure connection between the mobile phone where the app that acts as a display and login token resides and the device which uses or communicated with the middle ware. As an alternative, an existing username password can be used, where the qkey is used as a second factor.

The asset used determines what the context is and how rich this context is and also what the key elements are that are crucial to display to the user, to make a informed decision whether or not the user wants the asset to perform the operation on the context. For instance when the asset is an RSA private key for authentication, then de context can be a HASH to prove possession of the key, but also a logo to be displayed on the mobile phone and/or a URL, useragent, IP adres timestamp, service description geolocation etc.

The user process of the mobile phone can be as follows:
1. Originally, the context is bound to the asset in the secure element,
2. After reception of an secured and addressed message the app displays the context to the user, or at least a part of the context that is relevant for the user for this type of asset operation,
3. the user gives his approval,
4. After the user approval the secure element performs the operation.

The secure element contains the asset. To facilitate many users, the secure element is enhanced in such a way that the asset can be securely taken out of the secure element and inserted again when it is needed. One way to do this is to generate a symmetric key in the secure element and use this symmetric key with AES in OCB mode. If this symmetric key is only known in the secure element/HSM then the asset is as secure outside the HSM as inside. If this means of securing is the insertion and removal of an asset is securely replicated in control way among HSM a scalable solution is achieved. When this means can be backed up in a secure manner, for instance using smartcards, a business continuity is achieved. The HSM where the asset is located, can also count wrong PIN attempts or activation announce messages, and block operation when to many wrong tries are performed.

When along with the secure association of the secure element with the qkey, some form of attributes and addressing can additionally be established. The secure element could for instance be deployed in the owners own home, where the qkey based on the context in the request can determine where secure element is located and route it there. Thus an end user doesn't have to trust the qkey service operator with his assets. Multi-tenancy can be achieved when secure element can have different symmetric keys associated with different customers to enable to load distinction collections of assets, thus achieving multi tenancy and economies of scale.

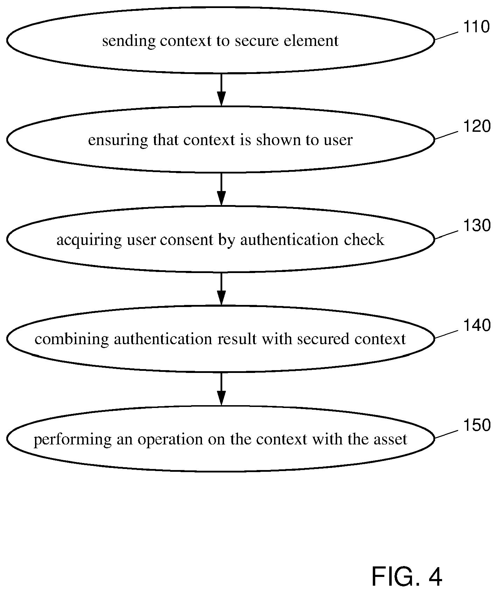

Fig. 4 shows a flow chart of a method according to the invention. The method is used for tightly coupling context to a secure pin and securely storing an asset in hardware, and comprises the steps of sending (110) the context to a secure element, ensuring (120) that the context is shown to a user, acquiring (130) user consent by performing an authentication check, combining (140) an authentication result with the secured context, and performing (150) an operation on the context with the asset if the authentication was successful.

The method can be performed using dedicated hardware structures, such as computer servers. Otherwise, the method can also at least partially be performed using a computer program product comprising instructions for causing a processor of a computer system or a control unit to perform a process including at least one of the method steps defined above. All (sub)steps can in principle be performed on a single processor. However, it is noted that at least one step can be performed on a separate processor, e.g. the step of performing the operation. A processor can be loaded with a specific software module. Dedicated software modules can be provided, e.g. from the Internet.

It will be understood that the above described embodiments of the invention are exemplary only and that other embodiments are possible without departing from the scope of the present invention. It will be understood that many variants are possible.

Such variants will be apparent for the person skilled in the art and are considered to fall within the scope of the invention as defined in the following claims.

## Claims

1. A method for tightly coupling context to a secure authentication result and securely storing an asset in a secure element, comprising the steps of:
- sending (110) the context to a secure element,
- ensuring (120) that the context is subsequently shown to a user on a display and entry device securely associated with the secure element,
- acquiring (130) user consent on the shown context by secure entry of an authentication result on the display and entry device, the authentication result being a user PIN, a biometric element of the user and/or a second device in possession of the user,
- checking the authentication result,
- combining (140) the authentication result with the secured context, and
- performing (150) an operation on the context with the asset if the authentication was successful,
wherein the display and entry device is implemented as an app on a user token, and wherein the app has the functions of:
- receiving a message from the secure element,
- displaying the context to the user, and
- secure entry of the authentication result.

2. A method according to claim 1, wherein the secure element was securely associated with the display and entry device in an earlier phase, wherein the secure element has access to authentication data, and wherein the ensuring step and the acquiring step are performed by the secure element.

3. A method according to claim 1, wherein the context is sent to the secure element through a server, preferably using a API, wherein the server was securely associated with the secure element in an earlier phase, wherein the server has access to authentication data, and wherein the ensuring step and acquiring step are performed by the server.

4. A method according to claim 3, wherein the API is implemented as a webservice.

5. A method according to claim 3 or 4, wherein the secure element is located at the server.

6. A method according to any of the preceding claims, wherein a device communicating with the middleware of the API is associated with the or secure element prior to the entry of the context into one of the API's.

7. A method according to any of the preceding claims, wherein the display and entry device can be a PC, laptop, mobile phone, watch, set-top box, point or sales terminal, ATM, website or application.

8. A method according to any of the preceding claims, wherein the context is shown to a user via a middleware.

9. A method according to any of the preceding claims, wherein a step of securely associating the server with the secure element also includes associating the server with the user token.

10. A method according to any of the preceding claims, wherein the association is performed by performing the steps of:
- generating, by the secure element, an asset and an activation announce message,
- exporting the activation announce message from the secure element and entering it to the display and entry component.

11. A method according to any of the preceding claims, wherein a static or dynamic association is established between middleware and API, between middleware and secure element, between middleware and display and pin entry device, between API and display and pin entry device, and/or between API and secure element.

12. A method according to any of the preceding claims, wherein the server and/or the secure element sends a message including context to a pre-specified address of the app.

13. A method according to any of the preceding claims, wherein the announce message is subsequently used to establish an end-2-end connection between a mobile phone having the app and the device which uses or communicates with the middleware.

14. A computer program product for tightly coupling context to a secure authentication result and securely storing an asset in a secure element, the computer program product comprising computer readable code for facilitating a processing unit to perform the steps of:
- sending (110) the context to a secure element,
- ensuring (120) that the context is subsequently shown to a user on a display and entry device securely associated with the secure element, the authentication result being a user PIN, a biometric element of the user and/or a second device in possession of the user,
- acquiring (130) user consent on the shown context by secure entry of an authentication result on the display and entry device,
- checking the authentication result,
- combining (140) an authentication result with the secured context, and
- performing (150) an operation on the context with the asset if the authentication was successful,
wherein the display and entry device is implemented as an app on a user token, and wherein the app has the functions of:
- receiving a message from the secure element,
- displaying the context to the user, and
- secure entry of the authentication result.

15. A server arranged to facilitate a method for tightly coupling context to a secure authentication result and securely storing an asset in a secure element, comprising the steps of:
- sending (110) the context to a secure element,
- ensuring (120) that the context is subsequently shown to a user on a display and entry device securely associated with the secure element, the authentication result being a user PIN, a biometric element of the user and/or a second device in possession of the user,
- acquiring (130) user consent on the shown context by secure entry of an authentication result on the display and entry device,
- checking the authentication result,
- combining (140) an authentication result with the secured context, and
- performing (150) an operation on the context with the asset if the authentication was successful,
wherein the context is sent to the secure element through a server that was securely associated with the secure element in an earlier phase, wherein the server has access to authentication data, wherein the ensuring step and acquiring step are performed by the server,
and wherein a step of securely associating the server with the secure element also includes associating the server with a user token,
wherein the display and entry device is implemented as an app on the user token, and wherein the app has the functions of:
- receiving a message from the secure element,
- displaying the context to the user, and
- secure entry of the authentication result.

## Patentansprüche

1. Verfahren zum engen Koppeln eines Kontextes mit einem sicheren Authentifizierungsergebnis und zum sicheren Speichern eines Assets in einem sicheren Element, das die folgenden Schritte umfasst:
- Senden (110) des Kontextes an ein sicheres Element,
- Sicherstellen (120), dass der Kontext anschließend einem Benutzer auf einer sicher dem sicheren Element zugeordneten Anzeige- und Eingabevorrichtung angezeigt wird,
- Erheben (130) einer Benutzerzustimmung zu dem angezeigten Kontext durch sichere Eingabe eines Authentifizierungsergebnisses auf der Anzeige- und Eingabevorrichtung, wobei das Authentifizierungsergebnis eine PIN des Benutzers, ein biometrisches Element des Benutzers und/oder eine zweite Vorrichtung im Besitz des Benutzers ist,
- Prüfen des Authentifizierungsergebnisses,
- Kombinieren (140) des Authentifizierungsergebnisses mit dem gesicherten Kontext, und
- Durchführen (150) einer Operation an dem Kontext mit dem Asset, wenn die Authentifizierung erfolgreich war,
wobei die Anzeige- und Eingabevorrichtung als eine App auf einem Benutzer-Token implementiert ist, und wobei die App die folgenden Funktionen aufweist:
- Empfangen einer Nachricht von dem sicheren Element,
- Anzeigen des Kontextes für den Benutzer, und
- sichere Eingabe des Authentifizierungsergebnisses.

2. Verfahren nach Anspruch 1, wobei das sichere Element der Anzeige- und Eingabevorrichtung in einer früheren Phase sicher zugeordnet wurde, wobei das sichere Element über Zugriff auf Authentifizierungsdaten verfügt, und wobei der Schritt des Sicherstellens und der Schritt des Einholens durch das sichere Element durchgeführt werden.

3. Verfahren nach Anspruch 1, wobei der Kontext an das sichere Element durch einen Server bevorzugt unter Verwendung einer API gesendet wird, wobei der Server dem sicheren Element in einer früheren Phase sicher zugeordnet wurde, wobei der Server über Zugriff auf Authentifizierungsdaten verfügt, und wobei der Schritt des Sicherstellens und der Schritt des Erhebens durch den Server durchgeführt werden.

4. Verfahren nach Anspruch 3, wobei die API als ein Web-Service implementiert wird.

5. Verfahren nach Anspruch 3 oder 4, wobei sich das sichere Element an dem Server befindet.

6. Verfahren nach einem der vorstehenden Ansprüche, wobei eine Vorrichtung, die mit der Middleware der API in Kommunikation steht, dem sicheren Element vor der Eingabe des Kontextes in eine der APIs zugeordnet wird.

7. Verfahren nach einem der vorstehenden Ansprüche, wobei die Anzeige- und Eingabevorrichtung ein PC, Laptop-Computer, Mobiltelefon, eine Uhr, eine Set-Top-Box, ein Point-of-Sale-Endgerät, ein Geldautomat, eine Website oder eine Anwendung sein kann.

8. Verfahren nach einem der vorstehenden Ansprüche, wobei der Kontext einem Benutzer über eine Middleware gezeigt wird.

9. Verfahren nach einem der vorstehenden Ansprüche, wobei ein Schritt des sicheren Zuordnens des Servers zu dem sicheren Element auch das Zuordnen des Servers zu dem Benutzer-Token beinhaltet.

10. Verfahren nach einem der vorstehenden Ansprüche, wobei das Zuordnen durch Durchführen der folgenden Schritte durchgeführt wird:
- Erzeugen, durch das sichere Element, eines Assets und einer Aktivierungsankündigungsnachricht,
- Exportieren der Aktivierungsankündigungsnachricht aus dem sicheren Element und Eingeben derselben in die Anzeige- und Eingabekomponente.

11. Verfahren nach einem der vorstehenden Ansprüche, wobei eine statische oder dynamische Zuordnung zwischen Middleware und API, zwischen Middleware und sicherem Element, zwischen Middleware und Anzeige- und PIN-Eingabevorrichtung, zwischen API und Anzeige- und PIN-Eingabevorrichtung und/oder zwischen API und sicherem Element hergestellt wird.

12. Verfahren nach einem der vorstehenden Ansprüche, wobei der Server und/oder das sichere Element eine Nachricht, die Kontext beinhaltet, an eine vorab spezifizierte Adresse der App sendet.

13. Verfahren nach einem der vorstehenden Ansprüche, wobei die Ankündigungsnachricht anschließend zum Herstellen einer Ende-zu-Ende-Verbindung zwischen einem Mobiltelefon, das die App aufweist, und der Vorrichtung, die die Middleware verwendet oder damit in Kommunikation steht, verwendet wird.

14. Computerprogrammprodukt zum engen Koppeln von Kontext mit einem sicheren Authentifizierungsergebnis und zum sicheren Speichern eines Assets in einem sicheren Element, wobei das Computerprogrammprodukt computerlesbaren Code umfasst, um einer Verarbeitungseinheit das Durchführen der folgenden Schritte zu erleichtern:
- Senden (110) des Kontextes an ein sicheres Element,
- Sicherstellen (120), dass der Kontext anschließend einem Benutzer auf einer Anzeige- und Eingabevorrichtung, die dem sicheren Element sicher zugeordnet ist, gezeigt wird, wobei das Authentifizierungsergebnis ein PIN des Benutzers, ein biometrisches Element des Benutzers und/oder eine zweite Vorrichtung im Besitz des Benutzers ist,
- Erheben (130) der Benutzerzustimmung zu dem gezeigten Kontext durch sichere Eingabe eines Authentifizierungsergebnisses auf der Anzeige- und Eingabevorrichtung,
- Prüfen des Authentifizierungsergebnisses,
- Kombinieren (140) eines Authentifizierungsergebnisses mit dem gesicherten Kontext, und
- Durchführen (150) einer Operation an dem Kontext mit dem Asset, wenn die Authentifizierung erfolgreich war,
wobei die Anzeige- und Eingabevorrichtung als eine App auf einem Benutzer-Token implementiert ist, und wobei die App die folgenden Funktionen aufweist:
- Empfangen einer Nachricht von dem sicheren Element,
- Anzeigen des Kontextes für den Benutzer, und
- sichere Eingabe des Authentifizierungsergebnisses.

15. Server, der dazu eingerichtet ist, ein Verfahren zum engen Koppeln von Kontext mit einem sicheren Authentifizierungsergebnis und zum sicheren Speichern eines Assets in einem sicheren Element zu erleichtern, das die folgenden Schritte umfasst:
- Senden (110) des Kontextes an ein sicheres Element,
- Sicherstellen (120), dass der Kontext anschließend einem Benutzer auf einer Anzeige- und Eingabevorrichtung, die dem sicheren Element sicher zugeordnet ist, gezeigt wird, wobei das Authentifizierungsergebnis ein PIN des Benutzers, ein biometrisches Element des Benutzers und/oder eine zweite Vorrichtung im Besitz des Benutzers ist,
- Erheben (130) der Benutzerzustimmung zu dem gezeigten Kontext durch sichere Eingabe eines Authentifizierungsergebnisses auf der Anzeige- und Eingabevorrichtung,
- Prüfen des Authentifizierungsergebnisses,
- Kombinieren (140) eines Authentifizierungsergebnisses mit dem gesicherten Kontext, und
- Durchführen (150) einer Operation an dem Kontext mit dem Asset, wenn die Authentifizierung erfolgreich war,
wobei der Kontext an das sichere Element durch einen Server gesendet wird, der dem sicheren Element in einer früheren Phase sicher zugeordnet wurde, wobei der Server über Zugriff auf Authentifizierungsdaten verfügt, wobei der Sicherungsschritt und der Erhebungsschritt durch den Server durchgeführt werden,
und wobei ein Schritt des sicheren Zuordnens des Servers zu dem sicheren Element auch das Zuordnen des Servers zu einem Benutzer-Token beinhaltet,
wobei die Anzeige- und Eingabevorrichtung als eine App auf dem Benutzer-Token implementiert ist, und wobei die App die folgenden Funktionen aufweist:
- Empfangen einer Nachricht von dem sicheren Element,
- Anzeigen des Kontextes für den Benutzer, und
- sichere Eingabe des Authentifizierungsergebnisses.

## Revendications

1. Procédé pour coupler de manière étroite un contexte à un résultat d'authentification sécurisé et stocker de manière sécurisée un actif dans un élément sécurisé, comprenant les étapes consistant à :
- envoyer (110) le contexte à un élément sécurisé,
- garantir (120) que le contexte est subséquemment affiché à un utilisateur sur un dispositif d'affichage et de saisie associé de manière sécurisée à l'élément sécurisé,
- acquérir (130) le consentement de l'utilisateur sur le contexte affiché par la saisie sécurisée d'un résultat d'authentification sur le dispositif d'affichage et de saisie, le résultat d'authentification étant un code PIN utilisateur, un élément biométrique de l'utilisateur et/ou un deuxième dispositif dont l'utilisateur est en possession,
- vérifier le résultat d'authentification,
- combiner (140) le résultat d'authentification avec le contexte sécurisé, et
- effectuer (150) une opération sur le contexte avec l'actif si l'authentification a réussi,
dans lequel le dispositif d'affichage et de saisie est implémenté sous forme d'une application sur un jeton utilisateur, et dans lequel l'application dispose des fonctions suivantes permettant de :
- recevoir un message provenant de l'élément sécurisé,
- afficher le contexte à l'utilisateur, et
- saisir de manière sécurisée le résultat d'authentification.

2. Procédé selon la revendication 1, dans lequel l'élément sécurisé a été associé de manière sécurisée au dispositif d'affichage et de saisie lors d'une phase antérieure, dans lequel l'élément sécurisé a accès à des données d'authentification, et dans lequel l'étape de garantie et l'étape d'acquisition sont réalisées par l'élément sécurisé.

3. Procédé selon la revendication 1, dans lequel le contexte est envoyé à l'élément sécurisé via un serveur, de préférence à l'aide d'une API, dans lequel le serveur a été associé de manière sécurisée à l'élément sécurisé lors d'une phase antérieure, dans lequel le serveur a accès à des données d'authentification, et dans lequel l'étape de garantie et l'étape d'acquisition sont réalisées par le serveur.

4. Procédé selon la revendication 3, dans lequel l'API est implémentée sous forme de service web.

5. Procédé selon la revendication 3 ou 4, dans lequel l'élément sécurisé est situé au niveau du serveur.

6. Procédé selon l'une quelconque des revendications précédentes, dans lequel un dispositif communiquant avec l'intergiciel de l'API est associé à l'élément sécurisé avant la saisie du contexte dans l'une des API.

7. Procédé selon l'une quelconque des revendications précédentes, dans lequel le dispositif d'affichage et de saisie peut être un PC, un ordinateur portable, un téléphone mobile, une montre, un décodeur, un terminal de point de vente, un distributeur automatique de billets (DAB), un site web ou une application.

8. Procédé selon l'une quelconque des revendications précédentes, dans lequel le contexte est affiché à un utilisateur via un intergiciel.

9. Procédé selon l'une quelconque des revendications précédentes, dans lequel une étape d'association sécurisée du serveur avec l'élément sécurisé comprend également l'association du serveur avec le jeton utilisateur.

10. Procédé selon l'une quelconque des revendications précédentes, dans lequel l'association est réalisée en effectuant les étapes consistant à :
- générer, par l'élément sécurisé, un actif et un message d'annonce d'activation,
- exporter le message d'annonce d'activation depuis l'élément sécurisé et saisir celui-ci dans le composant d'affichage et de saisie.

11. Procédé selon l'une quelconque des revendications précédentes, dans lequel une association statique ou dynamique est établie entre l'intergiciel et l'API, entre l'intergiciel et l'élément sécurisé, entre l'intergiciel et le dispositif d'affichage et de saisie de code PIN, entre l'API et le dispositif d'affichage et de saisie de code PIN, et/ou entre l'API et l'élément sécurisé.

12. Procédé selon l'une quelconque des revendications précédentes, dans lequel le serveur et/ou l'élément sécurisé envoie(nt) un message comprenant le contexte à une adresse prédéfinie de l'application.

13. Procédé selon l'une quelconque des revendications précédentes, dans lequel le message d'annonce est subséquemment utilisé pour établir une connexion de bout en bout entre un téléphone mobile doté de l'application et le dispositif qui utilise ou communique avec l'intergiciel.

14. Produit-programme informatique pour coupler de manière étroite un contexte à un résultat d'authentification sécurisé et stocker de manière sécurisée un actif dans un élément sécurisé, le produit-programme informatique comprenant un code lisible par ordinateur pour permettre à une unité de traitement d'effectuer les étapes consistant à :
- envoyer (110) le contexte à un élément sécurisé,
- garantir (120) que le contexte est subséquemment affiché à un utilisateur sur un dispositif d'affichage et de saisie associé de manière sécurisée à l'élément sécurisé, le résultat d'authentification étant un code PIN utilisateur, un élément biométrique de l'utilisateur et/ou un deuxième dispositif dont l'utilisateur est en possession,
- acquérir (130) le consentement de l'utilisateur sur le contexte affiché par la saisie sécurisée d'un résultat d'authentification sur le dispositif d'affichage et de saisie,
- vérifier le résultat d'authentification,
- combiner (140) le résultat d'authentification avec le contexte sécurisé, et
- effectuer (150) une opération sur le contexte avec l'actif si l'authentification a réussi,
dans lequel le dispositif d'affichage et de saisie est implémenté sous forme d'une application sur un jeton utilisateur, et dans lequel l'application dispose des fonctions suivantes permettant de :
- recevoir un message provenant de l'élément sécurisé,
- afficher le contexte à l'utilisateur, et
- saisir de manière sécurisée le résultat d'authentification.

15. Serveur agencé pour faciliter un procédé destiné à coupler de manière étroite un contexte à un résultat d'authentification sécurisé et à stocker de manière sécurisée un actif dans un élément sécurisé, comprenant les étapes consistant à :
- envoyer (110) le contexte à un élément sécurisé,
- garantir (120) que le contexte est subséquemment affiché à un utilisateur sur un dispositif d'affichage et de saisie associé de manière sécurisée à l'élément sécurisé, le résultat d'authentification étant un code PIN utilisateur, un élément biométrique de l'utilisateur et/ou un deuxième dispositif dont l'utilisateur est en possession,
- acquérir (130) le consentement de l'utilisateur sur le contexte affiché par la saisie sécurisée d'un résultat d'authentification sur le dispositif d'affichage et de saisie,
- vérifier le résultat d'authentification,
- combiner (140) le résultat d'authentification avec le contexte sécurisé, et
- effectuer (150) une opération sur le contexte avec l'actif si l'authentification a réussi,
dans lequel le contexte est envoyé à l'élément sécurisé via un serveur qui a été associé de manière sécurisée à l'élément sécurisé lors d'une phase antérieure, dans lequel le serveur a accès à des données d'authentification, dans lequel l'étape de garantie et l'étape d'obtention sont réalisées par le serveur,
dans lequel une étape d'association sécurisée du serveur avec l'élément sécurisé comprend également l'association du serveur avec un jeton utilisateur, et
dans lequel le dispositif d'affichage et de saisie est implémenté sous forme d'application sur le jeton utilisateur, et dans lequel l'application dispose des fonctions suivantes permettant de :
- recevoir un message provenant de l'élément sécurisé,
- afficher le contexte à l'utilisateur, et
- saisir de manière sécurisée le résultat d'authentification.
